# EUROPEAN PATENT SPECIFICATION

(11) **EP 2 458 757 B1**
(45) Date of publication and mention of the grant of the patent: **21.05.2014**
(21) Application number: 11189088.5
(22) Date of filing: 15.11.2011
(51) Int. Cl.: H04J 3/06

(54) **A method for transmitting IEEE 1588V2 synchronization packets over ethernet in link-by-link mode, via network elements having a transparent clock, and associated help device**
Verfahren zum Übertragen von IEEE-1588V2-Synchronisierungspaketen über Ethernet in Link-by-link Modus durch Netzelemente mit einem transparenten Takt und zugehörige Hilfsvorrichtung
Procédé de transmission de paquets de synchronisation IEEE 1588V2 sur Internet dans un mode lien par lien via des éléments de réseau à horloge transparente et dispositif d'aide associé

(30) Priority: 29.11.2010 FR 1059838
(43) Date of publication of application: 30.05.2012
(73) Proprietor: Alcatel Lucent, 75007 Paris (FR)
(72) Inventor: Le Pallec, Michel, 91620 Nozay (FR); Bui, Dinh Thai, 91620 Nozay (FR)
(74) Representative: Sciaux, Edmond

(56) References cited:
- KUTSCHERA C ET AL: "IEEE 1588 clock synchronization over IEEE 802.3/10 GBit ethernet", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27 September 2010 (2010-09-27), pages 71-76, XP031780850, ISBN: 978-1-4244-5978-0
- PAOLO FERRARI ET AL: "IEEE 1588-Based Synchronization System for a Displacement Sensor Network", IEEE TRANSACTIONS ON INSTRUMENTATION AND MEASUREMENT, IEEE SERVICE CENTER, PISCATAWAY, NJ, US, vol. 56, no. 2, 1 February 2008 (2008-02-01), pages 254-260, XP011199790, ISSN: 0018-9456

## Description

### Technical field

The invention pertains to packet-switched networks that comprise equipment (or nodes) supporting an Ethernet protocol (IEEE 802.3) within their interfaces (layer 2 of the OSI model), each associated with a measurement module used to support a time-stamping protocol of IEEE 1588V2 (or PTPV2) type, and connected to one another via a network path defined by a routing protocol or label-switch protocol in order to transmit synchronization packets intended to enable the synchronization of master and slave clocks.

Here, the term "packet-switched network" refers to a communication network in which digital messages are transmitted in the form of data packets from a source address to a recipient address by communication or routing operations. It should be noted that the communication medium may be wired or wireless.

Furthermore, the term "equipment (or node)" refers here to any item of network equipment (or element) representing a communication point or routing point. It may therefore, for example, be a label switch or a router.

Here, the term "master clock" refers to an element capable of transmitting, receiving, and processing time-stamped synchronization messages/packets according to an IEEE 1588V2 timestamp protocol. This element maintains the reference frequency or time that must be distributed to one or more slave clocks. Such an element may be, for example, an IEEE 1588V2 master clock. A master clock may be integrated into, or co-located with, a network element or item of equipment (such as a switch or router), but this is not mandatory.

Finally, the term "slave clock" refers here to an element capable of transmitting, receiving, and processing time-stamped messages/packets, in order to set a local time to the reference frequency or time that is distributed from the master clock by means of the timestamp protocol. This local clock is particularly intended to provide a reference frequency or time to the applications connected to the slave clock. Such an element may be, for example, integrated within, or co-located with, a base station (in a non-wired network), but this is not mandatory.

### State of the art

Whenever it is desired to synchronize a slave clock based on a master clock, a reference time or frequency must be distributed from the master clock to the slave clock by means of the nodes of a packet-switched network and by means of synchronization messages/packets.

By way of a non-exhaustive example, the synchronization messages may be messages of the IEEE 1588V2 protocol (or PTPV2 for "Precision Time Protocol release 2") in at least one direction of communication, for example, from the master clock to the slave clock, ("SYNC" messages, for example) or from the slave clock to the master clock ("DELAY_REQ" messages, for example). These synchronization messages contain timestamp information, which enable the slave clock's time to be synchronized from the master clock, based on which a frequency synchronization (or tuning) may be derived. As a reminder, the frequency may be derived from the time, but the reverse cannot.

Document KUTSCHERA C ET AL: "IEEE 1588 clock synchronization over IEEE 802.3/10 GBit ethernet", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27 September 2010, pages 71-76, XP031780850, ISBN: 978-1-4244-5978-0 discloses an IEEE 1588 clock synchronization over Ethernet.

### Summary of the invention

As a person skilled in the art knows, to synchronize a slave clock to a master clock, at least the outbound (or respectively, inbound) transmission time of the synchronization messages' packets (hereafter known as the synchronization packets) between the master and slave clocks must be known.

Some timestamp protocols, such as IEEE 1588V2, make it possible to determine this transmission time with a certain degree of accuracy, thanks to the timestamps that are carried out by the measurement modules which are called "transparent clocks" and which are associated with the nodes that are traversed.

As a reminder, a transparent clock is tasked with determining the local transit time (in the associated node) of the synchronization packets of a flow (by finding the difference between the local departure timestamp and the local arrival timestamp) and adding this determined local transit time to the current value of a so-called correction field which is located within the header of the synchronization packet in question (or within that of the associated "follow-up" message).

Before such an addition operation can be carried out within a synchronization packet by a transparent clock, the PTPV2 synchronization packet must have been locally detected from among the set of data packets. However, given that within a network, multiple different technologies and/or multiple different network protocols may have been deployed (such as, for example, MPLS ("MultiProtocol Label Switching"), MPLS-TP or Ethernet over PW ("Pseudo-wire")), each transparent clock must be capable of locally detecting as many PTPV2 identifiers as there are technologies and/or network protocols deployed. Furthermore, the detection (or location) of the correction field of a PTPV2 packet may prove difficult (or complex) in the event of a large protocol layer stack supporting the synchronization packets. By way of example, whenever the synchronization packets are transported by a pseudo-wire Ethernet technology (defined by the rule RFC 4448), the protocol layer stack may be IEEE1588V2 on UDP on IP on Ethernet on PW ("Pseudo-wire") on MPLS ("MultiProtocol Label Switching") on a transport layer.

Additionally, the complexity of a protocol layer stack may have an impact on the timestamp technique that is used, and more specifically on the correlation between the timestamp of a PTPV2 packet and the time when it was actually transmitted over a link, both with respect to the hardware implementation and with respect to possible time inaccuracies.

Furthermore, each addition operation carried out by a note's transparent clock on a PTPV2 packet in transit involves writing into the correction field of that PTPV2 packet. This intrusive action violates the principle of network layer isolation, and may potentially lead to security and/or integrity problems with the transmitted information. Furthermore, updating the correction field is an operation that becomes more complex the larger the protocol layer stack is. Additionally, the updating of the correction field of a PTPV2 packet also involves newly calculating that PTPV2 packet's "checksum" value. However, the likelihood that this new calculation will fail becomes greater the larger the protocol layer stack is. Consequently, if we want the addition operations to proceed correctly regardless of the protocol layer stack in question, then in each node affected by the timestamping, a transparent clock specifically suited to the technology and/or network protocol being used must be installed, and we must therefore provide for as many types of transparent clock as there are technologies and/or network protocols.

In order to improve the situation, it is possible to use boundary clocks instead of transparent clocks, and to manage the distribution of time according to a so-called link-to-link mode. Unfortunately, this solution cannot be systematically implemented, for example, due to a limitation caused by a cascade effect. This means that it can be demonstrated that every boundary clock introduces a phase error, and therefore the cascading of multiple boundary clocks along a network path leads to an accumulation of phase errors that quickly becomes problematic, particularly when we want to obtain time synchronization accuracies on the order of one microsecond, as is the case, for example, in the latest generation of mobile networks. Furthermore, the boundary clocks generally involve more complex implementation than that of the transparent clocks.

The purpose of the invention is therefore to improve the situation by enabling the use of measurement modules (or transparent clocks) of a single type, regardless of the protocol layer stack that is being considered, owing to a transmission in link-by-link mode over Ethernet that takes into consideration the support offered by the transparent clocks.

According to a first aspect, the invention proposes a method dedicated to the transmission of synchronization packets between master and slave clocks of a packet-switched network that comprises at least two elements supporting an Ethernet protocol (IEEE 802.3) within their interfaces (layer 2 of the OSI model), each associated with a measurement module serving as support for a time-stamping protocol of the IEEE 1588V2 (or PTPV2) type, and connected to one another via a network path defined by a routing protocol or label-switch protocol in order to transmit synchronization packets over the network.

This method more specifically comprises the following steps:
i) inserting into a synchronization packet that is meant to be transmitted from one of the master and slave clocks, known as the source clock, towards the other master or slave clock, known as the destination clock, information that is representative of at least part of the network path defined with respect to the routing protocol or label-switch protocol (such as, for example, the IP or MPLS protocol), and
ii) encapsulating on Ethernet (IEEE 802.3) the synchronization packet that had been inserted, then transmitting that encapsulated synchronization packet in a link-to-link mode towards the destination clock.

The method may comprise other characteristics that may be taken separately or in combination, and in particular:
- a step (iii) may be provided in which, whenever an element of the network path receives the encapsulated synchronization packet, an address of an Ethernet output port that corresponds to the inserted network path information and must be used by that element to continue the transmission of that received synchronization packet, is determined from within a lookup table of that item of equipment
- the inserted information may comprise at least the communication addresses of the master and slave clocks, defined with respect to the routing protocol or label-switch protocol;
   ➢ the inserted information may also comprise at least the communication address, defined with respect to the routing protocol or label-switch protocol, of equipment that is the next recipient of the synchronization packet over the network path;
   ➢ in a first variant, the inserted information may also comprise the communication address, defined with respect to the routing protocol or label-switch protocol, of each element located on the network;
   ➢ in a second variant, the inserted information may also comprise at least one parameter that defines the next hop that must be taken along the network path by the synchronization packet;
- information may be inserted into at least one chosen pre-existing field or within an additional "Type Length Value" (or TLV) field of the synchronization packet's header.

According to a second aspect, the invention proposes a device intended to help transmit synchronization packets between master and slave clocks of a packet-switched network that comprises at least two elements (or nodes) supporting an Ethernet protocol (IEEE 802.3) within their interfaces (layer 2 of the OSI model), each associated with a measurement module serving at support for a time-stamping protocol of the IEEE 1588V2 (or PTPV2) type, and connected to one another via a network path defined by a routing protocol or label-switch protocol in order to transmit synchronization packets over the network.

This device is structured, whenever a synchronization packet must be transmitted from one of the master and slave clocks, known as the source clock, towards the other master or slave clock, known as the destination clock, to control the insertion into that synchronization packet of information that is representative of at least part of the network path defined with respect to the routing protocol or label-switch protocol, then to control the encapsulation over Ethernet of the synchronization packet that had received the insertion in view of its being transmitted in link-by-link mode to the destination clock.

Furthermore, this device may additionally be structured, in the event that an encapsulated synchronization packet is received by an item of equipment that is located on the network path, to determine within a lookup table of that item of equipment the address of an Ethernet output port that corresponds to the information inserted in that encapsulated synchronization packet, so that that packet uses that determined Ethernet output port to continue the transmission of the received synchronization packet.

Additionally, this device may also be structured to control the insertion of information into at least one chosen pre-existing field or into an additional TLV field of a header of the synchronization packet.

According to a third aspect, the invention proposes a measurement module serving as a support for an IEEE 1588V2 timestamp protocol, capable of forming part of an item of equipment, belonging to a packet-switched network, supporting an Ethernet protocol (IEEE 802.3) within its interfaces, and comprising a help device of the type presented above.

### Brief description of the drawings

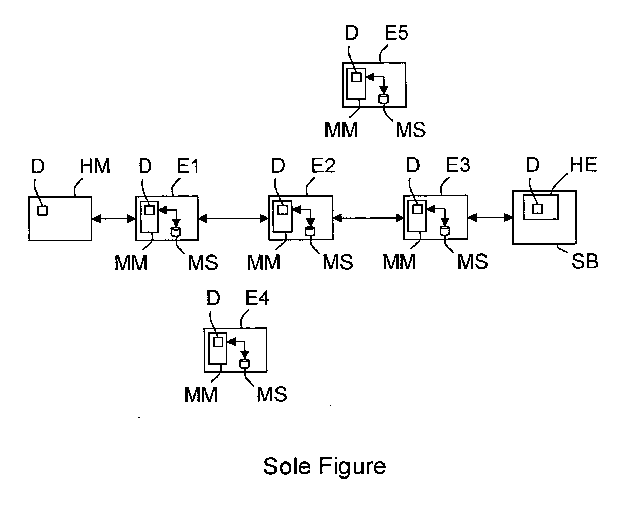

Other characteristics and advantages of the invention will become apparent upon examining the detailed description below, and the attached drawing, in which the sole figure schematically and functionally depicts the nodes and the master and slave clocks of a packet-switched network (supporting an Ethernet protocol), connect to one another and within some of which a measurement module is installed comprising an aid device according to the invention.

The drawing may serve not only to complete the invention, but also to contribute to defining it, if need be.

### Detailed description

It is an object of the invention to enable the transmission of synchronization packets between master HM and slave HE clocks of a packet-switched network comprising at least two items of equipment Ei whose interfaces are Ethernet (standard IEEE 802.3) interfaces, which are each associated with a measurement module (or transparent clock) MM serving as a support for an IEEE 1588V2 (or PTPV2) timestamp protocol, which are connected to one another via a network path defined by a routing protocol or label-switch protocol (or network protocol) in order to transmit synchronization packets over the network.

In what follows, it is assumed, by way of an illustrative example, that the slave clock HE is integrated into a base station SB of a LTE ("Long Term Evolution") network supporting an Ethernet protocol. However, the invention is not limited to this type of scenario.

It should be noted that the invention pertains to any type of packet-switched network, wired or wireless, and comprising equipment (or nodes) Ei which are located between master HM and slave HE clocks that must be synchronized to one another, and within which the incoming and outgoing packets are time-stamped so as to signal their arrival and departure times with respect to a local clock.

In the non-exhaustive example depicted in the sole figure, the packet-switched network comprises five items of equipment (or nodes) Ei (i = 1 to 5) each comprising a measurement module (or transparent clock) MM capable of processing synchronization messages/packets generated by the master clock HM and/or the slave clock HE. Furthermore, the master clocks HM and slave clocks HE are tasked with generating and processing the synchronization messages/packets so that these clocks can be synchronized.

These items of equipment (or nodes) Ei are, for example, IP routers, MPLS routers (or "label switch routers"), or MPLS-TP ("MultiProtocol Label Switching-Transport Profile") label switches.

It should be noted that in the non-exhaustive example depicted in the sole figure, the network path that connects the master HM and slave HE clocks, passes through three of the items of equipment (or nodes) Ei (and more precisely, E1, E2, and E3). Furthermore, the master clock HM is connected by an Ethernet link to the first item of equipment E1, and the base station SB (which comprises the slave clock HE) is connected to the third item of equipment E3.

This network path is intended to enable the transmission of packets between the master clock HM and the slave clock HE, here via the items of equipment E1 to E3, and particularly synchronization packets that define synchronization messages intended for the master clock HM or for the slave clock HE.

The synchronization messages are transmitted based on an IEEE 1588V2 (or PTPV2) timestamp protocol. Consequently, the synchronization messages that are transmitted from the master clock HM to the slave clock HE may be of the type "SYNC", and the synchronization messages that are transmitted from the slave clock HE to the master clock HM may be of the type "DELAY_REQ". However, the invention is not limited to these types of messages.

Each measurement module MM equipping one of the items of equipment Ei constitutes a transparent clock tasked with determining the local transit time (in the associated item of equipment Ei) of a flow's synchronization packets (by finding the difference between the local departure time stamp and the local arrival timestamp) and adding this determined local transit time to the current value of a so-called correction field which is located within the header of the synchronization packet in question (or within that of the associated "follow-up" message).

According to one aspect, the invention proposes implementing a method devoted to transmitting synchronization messages/packets between the master HM and slave HE clocks of a network of the type presented above.

This method comprises at least two steps (i) and (ii).

A first step (i) of the method consists of inserting into a synchronization packet that must be transmitted from one of the master HM and slave HE clocks, known as the source clock, to the other master HM or slave HE clock, known as the destination clock, information that is representative of at least part of the network path defined with respect to a routing protocol or label-switch protocol that is being used by the network.

Here, the term "routing protocol or label-switch protocol" refers to a network protocol that is used by the network and belongs to a layer that is located above layer 2, to which the Ethernet transport protocol belongs. In what follows, it is assumed, by way of an illustrative example, that the routing protocol or label-switch protocol is IP (or "Internet Protocol"). However, the invention is not limited to this type of network protocol. Thus, it also concerns, for example, the MPLS ("MultiProtocol Label Switching"), MPLS-TP ("MPLS-Transport Profile") and Ethernet over PW ("Pseudo-wire") protocols.

Given the aforementioned choice of routing protocols (IP), the information inserted into a PTPV2 packet is IP communication addresses that at least partially define the network path.

For example, one may insert at least the communication addresses of the master HM and slave HE clocks defined with respect to the routing protocol (here, IP).

Additionally, one may also insert at least the communication address (defined with respect to the routing protocol (here, IP)) of the item of equipment Ei (for example, E1 or E2 or E3) which is the next recipient of a particular synchronization packet on the network path.

In a first variant, one may also insert the communication address (defined with respect to the routing protocol (here, IP)) of each item of equipment Ei (here, E1 to E3) that is located on the network path. In other words, the inserted information explicitly defines the entire network path here.

In a second variant, one may also insert at least one parameter that defines the next hop that must be taken by that particular synchronization packet on the network path. This variant is more particularly suited to the situation in which the routing protocol or label-switch protocol is an MPLS or MPLS-TP protocol.

Generally speaking, the addressing information, which is inserted into each PTPV2 packet, is intended to enable link-by-link management within each item of equipment Ei belonging to a network path connecting a master clock HM to a slave clock HE. Consequently, the invention makes it possible to carry out a time distribution relying on a link-to-link PTPV2 packet management and using end-to-end or peer-to-peer transparent clocks HT.

It should be noted that the information can be inserted in different locations in the header of a PTPV2 packet, and particularly in at least one chosen preexisting field (such as, for example, "sourcePortIdentity" and/or "reserved"), or within an additional field of the type known as "Type Length Value" (or TLV).

A second step (ii) of the method consists of encapsulating on Ethernet the synchronization packet that received an insertion, then of transmitting that encapsulated synchronization packet in a link-by-link mode to the destination clock HM or HE. In other words, the encapsulation of PTPV2 packets on Ethernet is exclusively restricted so that the detection of the PTPV2 packets is carried out only by transparent clocks HT designed on the basis of the PTPV2 "profile" on Ethernet, regardless of the domain in question. Consequently, there is no longer a need for a single type of transparent clock HT configured for a single PTPV2 profile on Ethernet. For example, whenever the PTPV2 packet forms part of a SYNC message, the detection may be carried out on an Ethertype field value, as already defined by the standard, i.e. equal to 88F7 in hexadecimal.

The data transmission path is therefore a path defined on the IP level, while the synchronization path is chosen as out-of-band and on Ethernet with a link-to-link characteristic running from the master clock HM to the slave clock HE. This avoids the need to transmit signaling messages, given that there is no connection to establish.

It should be noted that the controlling of the insertion of addressing (or network path) information within each synchronization packet, and the controlling of the encapsulation on Ethernet of each synchronization packet that has received an insertion, may be ensured by a help device D associated with an item of equipment Ei or with a master HM or slave HE clock.

Here, the term "associated" refers both to forming an integral part of an item of equipment Ei or of a master HM or slave HE clock, and to being directly or indirectly coupled to an item of equipment Ei or to a master HM or slave HE clock. Consequently, a help device D may be constructed in the form of software (or computer) modules, or a combination of electronic circuits and software modules.

As depicted in a non-exhaustive fashion, a help device D, according to the invention, may potentially form part of a measurement module (or transparent clock) MM. This is particularly true, here, in the items of equipment Ei. However, this is not mandatory. Rather, a help device D may be external to a measurement module MM while preferentially being coupled to it (MM).

The inventive method may also comprise a third step (iii). This step consists, whenever a synchronization packet (here PTPV2) has been received by an item of equipment Ei of the network path, of determining within a lookup table of that item of equipment Ei the address of an Ethernet output port that it comprises and which corresponds to the inserted information, in order for that Ethernet output port to be used by the item of equipment Ei in order to continue the transmission of the received synchronization packet.

As depicted in the sole figure, this lookup table is stored within storage means MS of the item of equipment Ei in question. Here, each lookup table comprises addressing data that establishes a match between IP communication addresses and Ethernet output port addresses of an item of equipment Ei. In other words, each lookup table establishes a link between the routing/transfer plane (IP routing table or label table) and the Ethernet transport layer, so as to enable interoperation between the PTPV2 packets (transported by the Ethernet protocol) and the routing protocol or label-switch protocol (here, the IP routing protocol) for end-to-end addressing.

It should be noted that the storage means MS may be of any type known to the person skilled in the art. It may therefore be, for example, a memory, potentially a software memory.

It should also be noted that the determination within a lookup table of each Ethernet output port address corresponding to the inserted information within an encapsulated synchronization packet, may also be provided by the help device D.

The processing of a PTPV2 packet by a help device D of an item of equipment Ei may therefore proceed as follows. Every time a packet arrives at an input port of an item of equipment Ei, the help device D determines whether it comprises (here) an Ethertype field whose value is equal to 88F7 in hexadecimal. If it does, the help device D read the content of the field devoted to the inserted addressing information (for example, a TLV field). Next, the help device D searches within the local lookup table for the communication address of the Ethernet output port (Ethernet MAC address) which corresponds to the information read within the TLV field and which serves the network path. Finally, the help device D orders its item of equipment Ei to transmit the received PTPV2 packet via the Ethernet output port whose address it has just determined.

It should be noted that in some cases, it is possible to carry out the replacement, within each item of equipment Ei, of the source communication address, which is contained within the received PTPV2 packet and which is defined with respect to the routing protocol or label-switch protocol (here, the IP routing protocol), by the source communication address of that item of equipment Ei, also defined with respect to the routing protocol or label-switch protocol (here, the IP routing protocol). This replacement is carried out by the help device D within a PTPV2 packet before it orders its item of equipment to retransmit it that PTPV2 packet.

It should also be noted that the processing of a PTPV2 packet that has arrived in an item of equipment Ei also comprises the operation of updating the correction field by the measurement model MM subsequent to its having determined the local transit time, as well as potentially a new calculation by the measurement module MM of the value of the packets in question's "checksum" field(s). Generally speaking, each synchronization packet may undergo all normal operations of measurement modules (or transparent clocks) MM.

The invention is not limited to the embodiments of the transmission method, help device, and measurement module described above, which are given only as examples, but rather encompasses all variants that the person skilled in the art may envision within the framework of the claims below.

## Claims

1. A method for transmitting synchronization packets between a master (HM) and a slave (HE) clocks of a packet-switched network comprising at least two items of equipment (Ei) supporting an Ethernet protocol within their interfaces, each associated with a measurement module (MM) serving as a support for an IEEE 1588V2 timestamp protocol, the master (HM) and the slave (HE) clocks being connected to one another via a network path defined by a routing protocol or label-switch protocol, in order to transmit synchronization packets over said network, said method being **characterised by** the following steps:
i) inserting within a synchronization packet that must be transmitted from one of said master (HM) and slave (HE) clocks, known as the source clock, to the other of said master (HM) and slave (HE) clocks, known as the destination clock, information representative of at least part of said network path, and
ii) encapsulating on Ethernet said synchronization packet that received an insertion, then transmitting said encapsulated synchronization packet in a link-by-link mode to said destination clock.

2. A method according to claim 1, wherein a step (iii) is provided in which, upon receiving said synchronization packet encapsulated within an item of equipment (Ei) located on said network path, it is determined within a lookup table of said item of equipment (Ei) an address of an Ethernet output port corresponding to said inserted network path information, which must be used to continue the transmission of said received synchronization packet.

3. A method according to one of the claims 1 and 2, wherein said inserted information comprises at least the communication addresses of said master (HM) and slave (HE) clocks defined with respect to said routing protocol or label-switch protocol.

4. A method according to claim 3, wherein said inserted information also comprises at least the communication address, defined with respect to said routing protocol or label-switch protocol, of the item of equipment (Ei) that is the next recipient of said synchronization packet on said network path.

5. A method according to claim 3, wherein said inserted information also comprises the communication address, defined with respect to said routing protocol or label-switch protocol, of each item of equipment (Ei) located on said network path.

6. A method according to claim 3, wherein said inserted information also comprises at least one parameter defining a next hop that must be taken by said synchronization packet on said network path.

7. A method according to any one of the claims 1 to 6, wherein said information is inserted into at least one chosen pre-existing field of a header of the synchronization packet.

8. A method according to any one of the claims 1 to 6, wherein said information is inserted into an additional field known as "Type Length Value" of a header of the synchronization packet.

9. A help device (D) for transmitting synchronization packets between a master (HM) and a slave (HE) clocks of a packet-switched network comprising at least two items of equipment (Ei) supporting an Ethernet protocol within their interfaces, each associated with a measurement module (MM) serving as a support for an IEEE 1588V2 timestamp protocol, the master (HM) and the slave (HE) clocks being connected to one another via a network path defined by a routing protocol or label-switch protocol, in order to transmit synchronization packets over said network, said device (D) being **characterised by** being structured, whenever a synchronization packet must be transmitted from one of said master (HM) and slave (HE) clocks, known as the source clock, to the other of said master (HM) and slave (HE) clocks, known as the destination clock, to control the insertion, within that synchronization packet, of information representative of at least part of said network path, and then to control the encapsulation on Ethernet of said synchronization packet having received an insertion in view of its being transmitted in link-by-link mode to said destination clock.

10. A device according to claim 9, structured, whenever a synchronization packet encapsulated by an item of equipment (Ei) located on said network path is received, to determine within a lookup table of said item of equipment (Ei) an Ethernet output port address corresponding to said inserted information within said encapsulated synchronization packet, so that said item of equipment (Ei) uses that determined Ethernet output port to continue the transmission of said received synchronization packet.

11. A device according to one of the claims 9 and 10, structured to control the insertion of said information within at least one chosen pre-existing field of a header of the synchronization packet.

12. A device according to one of the claims 9 and 10, structured to control the insertion of said information into an additional field known as "Type Length Value" of a header of the synchronization packet.

13. A measurement module (MM), capable of serving as a support for an IEEE 1588V2 timestamp protocol and to form part of an item of equipment (Ei) supporting an Ethernet protocol on its interfaces and belonging to a packet-switched network, and comprising a help device (D) according to any one of the claims 9 to 12.

## Patentansprüche

1. Verfahren zur Übertragung von Synchronisationspaketen zwischen einem Master-Taktgeber (HM) und einem Slave-Taktgeber (HE) eines paketvermittelten Netzwerks mit mindestens zwei Ausrüstungselementen (Ei), die ein Ethernet-Protokoll innerhalb ihrer Schnittstellen unterstützen und jeweils mit einem als Unterstützung für ein Zeitstempelprotokoll gemäß der IEEE-Norm 1588V2 dienenden Messmodul (MM) assoziiert sind, wobei der Master-Taktgeber (HM) und der Slave-Taktgeber (HE) über einen von einem Routing-Protokoll oder einem Labelvermittlungs-Protokoll definierten Netzwerkpfad miteinander verbunden sind, um Synchronisationspakete über das besagte Netzwerk zu übertragen, wobei das Verfahren durch die folgenden Schritte gekennzeichnet ist:
i) Einfügen von Informationen, die für zumindest einen Teil des besagten Netzwerkpfads repräsentativ sind, in ein Synchronisationspaket, welches von entweder dem besagten Master-Taktgeber (HM) oder dem besagten Slave-Taktgeber (HE), bekannt als der Quell-Taktgeber, an den besagten anderen entweder Master-Taktgeber (HM) oder Slave-Taktgeber (HE), bekannt als der Ziel-Taktgeber, übertragen werden soll, und
ii) Einkapseln des besagten Synchronisationspakets, welches eine Einfügung erhalten hat, im Ethernet, und anschließendes Übertragen des besagten eingekapselten Synchronisationspakets in einem Verbindungsstrecke-pro-Verbindungsstrecke-Modus an den besagten Ziel-Taktgeber.

2. Verfahren nach Anspruch 1, wobei ein Schritt (iii) vorgesehen ist, in welchem nach Empfang des besagten in einem auf dem besagten Netzwerkpfad vorhandenen Ausrüstungselement (Ei) eingekapselten Synchronisationspaket in einer Lookup-Tabelle des besagten Ausrüstungselements (Ei) eine Adresse eines Ethernet-Ausgangsports ermittelt wird, welche den besagten eingefügten Netzwerkpfad-Informationen entspricht und für das Fortsetzen der Übertragung des besagten empfangenen Synchronisationspakets zu verwenden ist.

3. Verfahren nach einem der Ansprüche 1 und 2, wobei die besagten eingefügten Informationen zumindest die in Bezug auf das besagte Routing-Protokoll oder das besagte Labelvermittlungsprotokoll definierten Kommunikationsadressen des besagten Master-Taktgebers (HM) und des besagten Slave-Taktgebers (HE) umfassen.

4. Verfahren nach Anspruch 3, wobei die besagten eingefügten Informationen ebenfalls zumindest die in Bezug auf das besagte Routing-Protokoll oder das besagte Labelvermittlungsprotokoll definierte Kommunikationsadresse des Ausrüstungselements (Ei), welches der nächste Empfänger des besagten Synchronisationspaket auf dem besagten Netzwerkpfad ist, umfassen.

5. Verfahren nach Anspruch 3, wobei die besagten eingefügten Informationen ebenfalls die in Bezug auf das besagte Routing-Protokoll oder das besagte Labelvermittlungsprotokoll definierte Kommunikationsadresse eines jeden auf dem besagten Netzwerkpfad vorhandenen Ausrüstungselements (Ei) umfassen.

6. Verfahren nach Anspruch 3, wobei die besagten eingefügten Informationen ebenfalls zumindest einen Parameter, welcher einen von dem besagten Synchronisationspaket auf dem besagten Netzwerkpfad anzusteuernden nächsten Hop definiert, umfassen.

7. Verfahren nach einem beliebigen der Ansprüche 1 bis 6, wobei die besagten Informationen in mindestens ein ausgewähltes bereits bestehendes Feld eines Headers des Synchronisationspakets eingefügt werden.

8. Verfahren nach einem beliebigen der Ansprüche 1 bis 6, wobei die besagten Informationen in ein als "Type Length Value" bekanntes zusätzliches Feld eines Headers des Synchronisationspakets eingefügt werden.

9. Hilfsvorrichtung (D) zur Übertragung von Synchronisationspaketen zwischen einem Master-Taktgeber (HM) und einem Slave-Taktgeber (HE) eines paketvermittelten Netzwerks mit mindestens zwei Ausrüstungselementen (Ei), die ein Ethernet-Protokoll innerhalb ihrer Schnittstellen unterstützen und jeweils mit einem als Unterstützung für ein Zeitstempelprotokoll gemäß der IEEE-Norm 1588V2 dienenden Messmodul (MM) assoziiert sind, wobei der Master-Taktgeber (HM) und der Slave-Taktgeber (HE) über einen von einem Routing-Protokoll oder einem Labelvermittlungs-Protokoll definierten Netzwerkpfad miteinander verbunden sind, um Synchronisationspakete über das besagte Netzwerk zu übertragen, wobei die besagte Vorrichtung (D) dafür strukturiert ist, immer dann, wenn ein Synchronisationspaket entweder von dem besagten Master-Taktgeber (HM) oder dem besagten Slave-Taktgeber (HE), bekannt als der Quell-Taktgeber, an den besagten anderen entweder Master-Taktgeber (HM) oder Slave-Taktgeber (HE), bekannt als der Ziel-Taktgeber, übertragen werden soll, das Einfügen von Informationen, die für zumindest einen Teils des besagten Netzwerkpfads repräsentativ sind, zu steuern und anschließend das Einkapseln des besagten Synchronisationspakets, welches eine Einfügung erhalten hat, im Ethernet im Hinblick auf dessen Übertragung in einem Streckepro-Strecke-Modus an den besagten Ziel-Taktgeber zu steuern.

10. Vorrichtung nach Anspruch 9, dafür strukturiert, immer dann, wenn ein von einem auf dem besagten Netzwerkpfad vorhandenen Ausrüstungselement (Ei) eingekapseltes Synchronisationspaket empfangen wird, innerhalb einer Lookup-Tabelle des besagten Ausrüstungselements (Ei) eine Adresse eines Ethernet-Ausgangsports zu ermitteln, welche den besagten in dem besagten eingekapselten Synchronisationspaket eingefügten Netzwerkpfad-Informationen entspricht, zu ermitteln, so dass das besagte Ausrüstungselement (Ei) den ermittelten Ethernet-Ausgangsport benutzt, um die Übertragung des besagten empfangenen Synchronisationspakets fortzusetzen.

11. Vorrichtung nach einem der Ansprüche 9 und 10, dafür strukturiert, das Einfügen der besagten Informationen innerhalb zumindest eines ausgewählten bereits bestehenden Feldes eines Headers des Synchronisationspakets zu steuern.

12. Verfahren nach einem der Ansprüche 9 und 10, dafür strukturiert, das Einfügen der besagten Informationen in ein als "Type Length Value" bekanntes zusätzliches Feld eines Headers des Synchronisationspakets zu steuern.

13. Messmodul (MM), welches fähig ist, als eine Unterstützung für ein Zeitstempelprotokoll gemäß der IEEE-Norm 1588V2 zu dienen und einen Teil eines Ausrüstungselements (Ei), welches ein Ethernet-Protokoll auf seinen Schnittstellen unterstützt und einem paketvermittelten Netzwerk angehört, zu bilden und eine Hilfsvorrichtung (D) gemäß einem beliebigen der Ansprüche 9 bis 12 umfasst.

## Revendications

1. Procédé de transmission de paquets de synchronisation entre une horloge maîtresse (HM) et une horloge esclave (HE) d'un réseau à commutation par paquets comprenant au moins deux éléments d'équipement (Ei) prenant en charge un protocole Ethernet dans leurs interfaces, chacune étant associée à un module de mesure (MM) servant de support pour un protocole d'estampille temporelle IEEE 1588V2, l'horloge maîtresse (HM) et l'horloge esclave (HE) étant connectées l'une à l'autre par l'intermédiaire d'un chemin de réseau défini par un protocole de routage ou un protocole de commutation d'étiquettes, afin de transmettre des paquets de synchronisation sur ledit réseau, ledit procédé étant **caractérisé par** les étapes suivantes :
i) insérer dans un paquet de synchronisation qui doit être transmis à partir d'une horloge parmi ladite horloge maîtresse (HM) et ladite horloge esclave (HE), appelée horloge source, vers l'autre horloge parmi ladite horloge maîtresse (HM) et ladite horloge esclave (HE), appelée horloge de destination, des informations représentatives d'au moins une partie dudit chemin de réseau, et
ii) encapsuler sur Ethernet ledit paquet de synchronisation qui a reçu une insertion, puis transmettre ledit paquet de synchronisation encapsulé dans un mode section par section à ladite horloge de destination.

2. Procédé selon la revendication 1, dans lequel une étape (iii) est fournie dans laquelle, lors de la réception dudit paquet de synchronisation encapsulé dans un élément d'équipement (Ei) situé sur ledit chemin de réseau, on détermine dans une table de consultation dudit élément d'équipement (Ei) une adresse d'un port de sortie Ethernet correspondant auxdites informations de chemin de réseau insérées, qui doit être utilisé pour continuer la transmission dudit paquet de synchronisation reçu.

3. Procédé selon l'une des revendications 1 et 2, dans lequel lesdites informations insérées comprennent au moins les adresses de communication de ladite horloge maîtresse (HM) et de ladite horloge esclave (HE) définies par rapport audit protocole de routage ou audit protocole de commutation d'étiquettes.

4. Procédé selon la revendication 3, dans lequel lesdites informations insérées comprennent également au moins l'adresse de communication, définie par rapport audit protocole de routage ou audit protocole de commutation d'étiquettes, de l'élément d'équipement (Ei) qui est le prochain destinataire dudit paquet de synchronisation sur ledit chemin de réseau.

5. Procédé selon la revendication 3, dans lequel lesdites informations insérées comprennent également l'adresse de communication, définie par rapport audit protocole de routage ou audit protocole de commutation d'étiquettes, de chaque élément d'équipement (Ei) situé sur ledit chemin de réseau.

6. Procédé selon la revendication 3, dans lequel lesdites informations insérées comprennent également au moins un paramètre définissant un saut suivant qui doit être effectué par ledit paquet de synchronisation sur ledit chemin de réseau.

7. Procédé selon l'une quelconque des revendications 1 à 6, dans lequel lesdites informations sont insérées dans au moins un champ préexistant choisi d'un en-tête du paquet de synchronisation.

8. Procédé selon l'une quelconque des revendications 1 à 6, dans lequel lesdites informations sont insérées dans un champ supplémentaire appelé « Type-Longueur-Valeur » d'un en-tête du paquet de synchronisation.

9. Dispositif d'aide (D) pour transmettre des paquets de synchronisation entre une horloge maîtresse (HM) et une horloge esclave (HE) d'un réseau à commutation par paquets comprenant au moins deux éléments d'équipement (Ei) prenant en charge un protocole Ethernet dans leurs interfaces, chacune étant associée à un module de mesure (MM) servant de support pour un protocole d'estampille temporelle IEEE 1588V2, l'horloge maîtresse (HM) et l'horloge esclave (HE) étant connectées l'une à l'autre par l'intermédiaire d'un chemin de réseau défini par un protocole de routage ou un protocole de commutation d'étiquettes, afin de transmettre des paquets de synchronisation sur ledit réseau, ledit dispositif (D) étant **caractérisé en ce qu'**il est structuré, chaque fois qu'un paquet de synchronisation doit être transmis à partir d'une horloge parmi ladite horloge maîtresse (HM) et ladite horloge esclave (HE), appelée horloge source, vers l'autre horloge parmi ladite horloge maîtresse (HM) et ladite horloge esclave (HE), appelée horloge de destination, pour commander l'insertion, dans ce paquet de synchronisation, d'informations représentatives d'au moins une partie dudit chemin de réseau, puis pour commander l'encapsulation sur Ethernet dudit paquet de synchronisation ayant reçu une insertion en vue de sa transmission en mode section par section à ladite horloge de destination.

10. Dispositif selon la revendication 9, structuré, chaque fois qu'un paquet de synchronisation encapsulé par un élément d'équipement (Ei) situé sur ledit chemin de réseau est reçu, pour déterminer dans une table de consultation dudit élément d'équipement (Ei) une adresse du port de sortie Ethernet correspondant auxdites informations insérées dans ledit paquet de synchronisation encapsulé, de sorte que ledit élément d'équipement (Ei) utilise ce port de sortie Ethernet déterminé pour continuer la transmission dudit paquet de synchronisation reçu.

11. Dispositif selon l'une des revendications 9 et 10, structuré pour commander l'insertion desdites informations dans au moins un champ préexistant choisi d'un en-tête du paquet de synchronisation.

12. Dispositif selon l'une des revendications 9 et 10, structuré pour commander l'insertion desdites informations dans un champ supplémentaire appelé « Type-Longueur-Valeur » d'un en-tête du paquet de synchronisation.

13. Module de mesure (MM), pouvant servir de support pour un protocole d'estampille temporelle IEEE 1588V2 et former une partie d'un élément d'équipement (Ei) prenant en charge un protocole Ethernet sur ses interfaces et appartenant à un réseau à commutation par paquets, et comprenant un dispositif d'aide (D) selon l'une quelconque des revendications 9 à 12.
